# EUROPÄISCHE PATENTSCHRIFT

(11) **EP 0 313 780 B1**
(45) Veröffentlichungstag und Bekanntmachung des Hinweises auf die Patenterteilung: **03.03.1993**
(21) Anmeldenummer: 88114840.7
(22) Anmeldetag: 10.09.1988
(51) Int. Cl.: B60J 7/10, B60J 7/06

(54) **Bolzenlose Höhenverstellvorrichtung**
Boltless height adjustment device
Dispositif de réglage en hauteur sans boulons

(30) Priorität: 30.10.1987 DE 3736936
(43) Veröffentlichungstag der Anmeldung: 03.05.1989
(73) Patentinhaber: MAN Nutzfahrzeuge Aktiengesellschaft, 80976 München (DE)
(72) Erfinder: Kloss, Hans-Joachim, D-8060 Dachau (DE)

(56) Entgegenhaltungen:
- DE-U- 8 508 779
- US-A- 2 656 216
- US-A- 4 378 173

## Beschreibung

Die Erfindung bezieht sich auf eine Höhenverstellvorrichtung für das Planen-Verdeckgestell von Lkw mit mindestens zwei teleskopartig zueinander verstellbaren Rohrprofilen, die in ihrer Höhenerstreckung in abgestuften Abständen miteinander arretierbar sind.

Es sind Höhenverstellvorrichtungen mit zwei ineinanderlaufenden, in Stufen gegeneinander verstellbaren Rohrprofilen, die über einen einschiebbaren und ausziehbaren Bolzenstecker miteinander verbindbar sind, bekannt. Der Bolzenstecker kann dabei meist nur mit Schwierigkeiten in die oft nicht sichtbaren Löcher eingesteckt werden, wobei darauf zu achten ist, daß diese exakt fluchten. Erschwert wird die Arretierung dadurch, daß der Bedienungsmann mit einer Hand das schwere Dach halten muß. Ein weiterer Nachteil besteht darin, daß der Bolzenstecker als Losteil durch eine Kette gegen Verlust gesichert werden muß, wobei die Kette nur sehr dünn sein darf und mithin leicht abreißt. Außerdem sind die Steckerköpfe erheblich störend, da sie an Stellen mit wenig Platz, nämlich entweder direkt über den Einstecklatten, oder in den Laderaum hineinragend, angeordnet sind.

Es ist eine gatttungsgemäße Höhenverstelleinrichtung nach der US-PS 4 378 173 bekannt, deren Arretiereinheit aber mit zwei längsgeschlitzten Rohrprofilen weder in der Höhe noch in der Tiefe ortsfest ist.

Der Erfindung liegt die Aufgabe zugrunde, eine Höhenverstellvorrichtung mit einem sicheren und gleichzeitig einfach handhabbaren Verstell- und Arretiermechanismus zu schaffen.

Dies wird erfindungsgemäß dadurch erreicht, daß die beiden Rohrprofile sowohl im arretierten als auch im nicht arretierten Zustand als auch beim Verstellvorgang von einer in Höhen- und Tiefenerstreckung ortsfesten, aber drehbaren Arretiereinheit mit einem Kulissenelement und einem Hebel ständig durchgriffen sind. Solcherart sind die beiden, gegeneinander verschiebbaren Rohrprofile durch das drehbare Kulissenelement ständig miteinander in Eingriff, und es muß nicht nach einem irgendwo hängenden Losteil, z.B. in Form eines Bolzensteckers, gesucht werden. Die erfindungsgemäße Einrichtung ist ortsfest und kann in gar keinem Fall verloren gehen. Außerdem benötigt der außen angebrachte Teil der Vorrichtung wenig Raum und ist an einer wenig störenden Stelle angebracht.

Die Unteransprüche 2 bis 5 beinhalten Merkmale zur detaillierten Ausbildung der Erfindung.

Nach Anspruch 6 ist der Hebel über Längsverschiebung in einer abgeflachten Stufe des Kulissenelementes zum Sicherheitsstift hin ein- und ausrastbar, und durch Drehung des Hebels ist das Kulissenelement derart mitgeführt, daß es bei einer Drehung von 90° die miteinander verriegelten Profilrohre zur gegenseitigen Lageveränderung freigibt. Solcherart wird eine Fallensicherung mit einem einfachen, um 90° verschwenkbaren Hebel verbunden, was für den Bedienungsmann eine wesentlich Erleichterung des Verstell- und Arretiervorganges darstellt.

Nach einem weiteren Merkmal der Erfindung kann das Kulissenelement ein Kunststoffteil sein, vorzugsweise ein Spritzgußteil. Das Kulissenelement wird solcherart billig in der Herstellung, seine in verschiedenen Stufen erforderlichen Toleranzen genügen den Möglichkeiten des Spritzgußverfahrens. Außerdem hat das Kulissenelement aus Kunststoff noch den Vorteil, daß kein Rostverklemmen im Zusammenwirken mit dem Rohrprofil und dem Hebel entsteht.

Weitere Merkmale und Vorteile der Erfindung sind den Ansprüchen, der Zeichnung und der Figurenbeschreibung zu entnehmen.

Die Erfindung ist in einem Ausführungbeispiel dargestellt. Es zeigen:
- Fig. 1: eine Höhenverstellvorrichtung im entkuppelten Zustand,
- Fig. 2: einen Schnitt der Höhenverstellvorrichtung nach Fig. 1 längs einer Linie A-A,
- Fig. 3: Höhenverstellvorrichtung im gekuppelten Zustand,
- Fig. 4: einen Schnitt der Höhenverstellvorrichtung nach Fig. 3 längs einer Linie B-B.

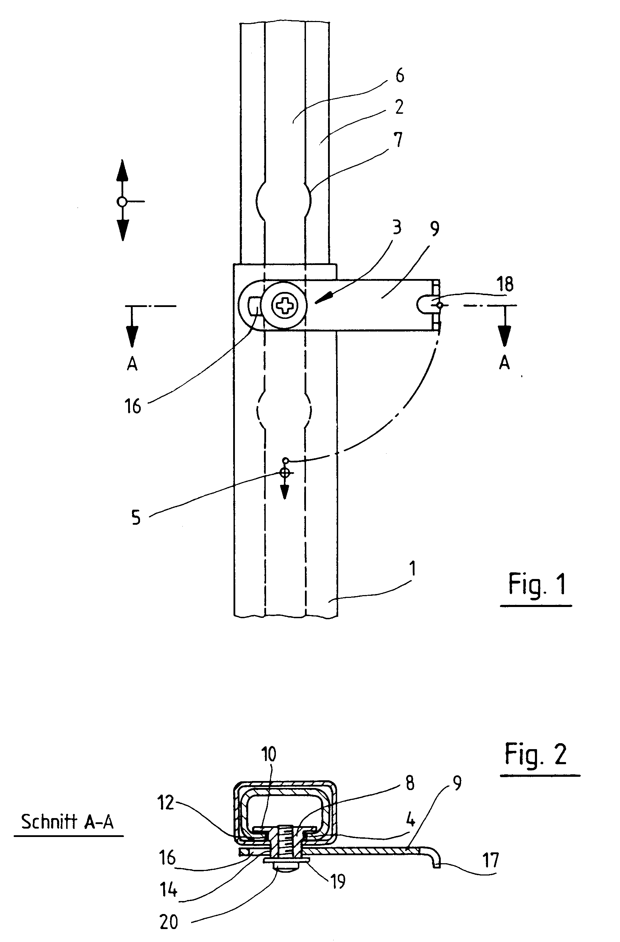

Fig. 1 und Fig. 2 zeigen die Höhenverstellvorrichtung im entkuppelten Zustand, d.h., das stationäre Rohrprofil 1 und das darin ein- und ausschiebbare Rohrprofil 2 können gegeneinander stufenweise verstellt werden, und zwar in den Abständen der Kreisabschnitte 7 innerhalb des Schlitzes 6 in einer Wand des Profilrohres 2. Das Rohrprofil 1 weist eine Durchgangsbohrung 4 auf, in der die Arretiereinheit 3, bestehend aus dem Kulissenelement 8, dem Hebel 9, der Scheibe 19 und der Schraube 20, über die kreisrunde Stufe 13 des Kulissenelementes 8 drehbar gelagert ist. Das Kulissenelement 8 hintergreift mit seiner Scheibe 10 die Innenseite der mit Schlitz 6 versehenen Wand des Rohrprofiles 2. An der Scheibe 10 schließt sich einstückig die Stufe 11 an, die Abflachungen 12 aufweist, wobei im eingekuppelten Zustand der Arretiereinheit 3 der kreisrunde Teil der Stufe 11 formschlüssig in den in der Bahn des Schlitzes 6 liegenden Kreisabschnitten 7 festliegt und im ausgekuppelten Zustand der Arretiereinrichtung, d.h., diese über den Hebel 9 um 90° verschwenkt, sind die Abflachungen 12 der Stufe 11 im Schlitz 6 des Profilrohres 2 gleitbar angeordnet.

Die Stufe 14 schließt sich an der kreisrunden, in der Durchgangsbohrung 4 geführten Stufe 13 einstückig an. Sie besteht aus einem kreisrunden Teil und Abflachungen 15, die in dem Schlitz 16 des Hebels 9 geführt sind. Der Hebel 9 weist an seinem unteren Teil ein gekröpftes Hebelende 17 auf, in dem ein nach unten offener Schlitz 18 vorgesehen ist, der bei eingekuppelter Arretiereinheit mit dem Sicherungsstift 5 in Eingriff gebracht wird. Die zwischen der einstückig mit dem Kulissenelement verbundenen Scheibe 10 und der den Schlitz 16 des Hebels 9 überdeckenden Scheibe 19 liegenden Wände des Profilrohres 1 und 2 sowie der Hebel 9 in seiner Dickenausdehnung sind über Schrauben 20 zusammengehalten.

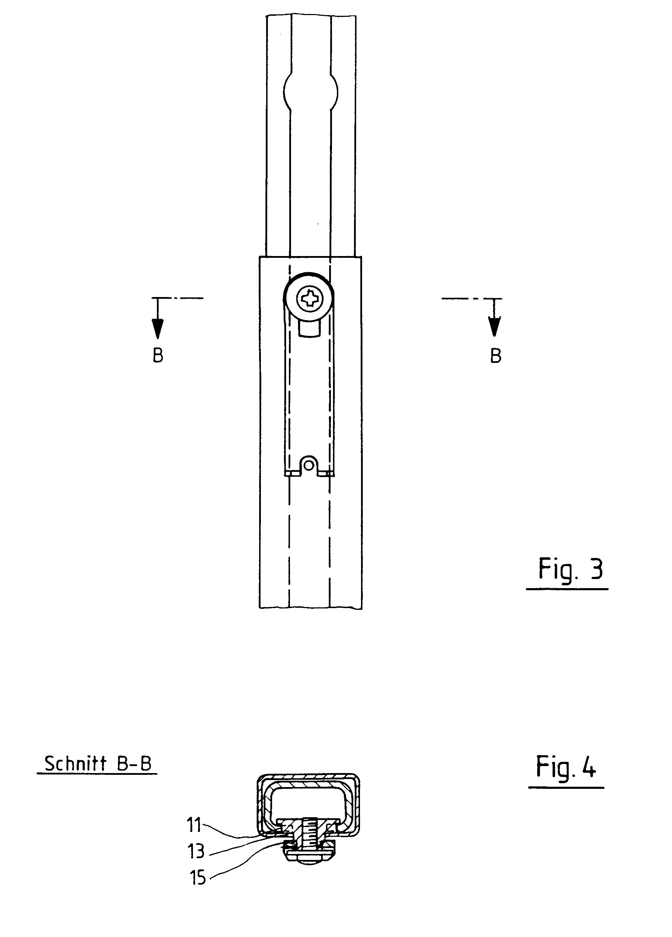

Fig. 1 und Fig. 2 zeigen die Rohre 1 und 2 im entkuppelten Zustand, wobei der Hebel 9 durch Aufwärtsbewegung desselben im Schlitz 16 aus der in den Figuren 3 und 4 gezeigten verriegelten Stellung aus dem Sicherungsstift 5 ausgehoben und anschließend um 90° verschwenkt wird.

## Patentansprüche

1. Höhenverstellvorrichtung für das Planenverdeckgestell von Lkw mit mindestens zwei teleskopartig zueinander verstellbaren Rohrprofilen, die in ihrer Höhenerstreckung in abgestuften Abständen miteinander arretierbar sind, dadurch gekennzeichnet, daß die beiden Rohrprofile (1, 2) sowohl im arretierten als auch im nicht arretierten Zustand, also auch beim Verstellvorgang, von einer in Höhen- und Tiefenerstreckung ortsfesten, aber drehbaren Arretiereinheit mit einem Kulissenelement (8) und einem Hebel (9) ständig durchgriffen sind.

2. Höhenverstellvorrichtung nach Anspruch 1, dadurch gekennzeichnet, daß an einem Ende einer Wand, vorzugsweise dem oberen Ende des stationären Rohrprofils (1) eine Durchgangsbohrung (4) und im vertikalen Abstand dazu ein nach außen weisender Sicherungsstift (5) vorgesehen ist, daß das ein- und ausschiebbare Rohrprofil (2) an einer Wand, korrespondierend mit der Durchgangsbohrung (4), einen Schlitz (6) mit in Abständen in der Schlitzbahn angeordneten Kreisabschnitten (7) aufweist.

3. Höhenverstellvorrichtung nach den Ansprüchen 1 oder 2, dadurch gekennzeichnet, daß das Kulissenelement (8) 4-fach abgestuft ist, derart, daß eine den Schlitz (6) und die Kreisabschnitte (7) übergreifende Scheibe (10) sich gegen die Innenseite der Wand des Rohrprofils (2) abstützt, daß die die Wand des Rohrprofils (2) durchgreifende Stufe (11) kreisförmig, entsprechend dem Durchmesser des Kreisabschnittes (7) mit Abflachungen (12) entsprechend der Breite des Schlitzes (6) ausgebildet ist, daß die die Wand des stationären Rohrprofils (1) durchgreifende Stufe (13) entsprechend dem Durchmesser der Bohrung (4) ausgebildet ist und die außenliegende Stufe (14) Abflachungen (15) aufweist.

4. Höhenverstellvorrichtung nach den Ansprüchen 1 bis 3, dadurch gekennzeichnet, daß der Hebel (9) einen Schlitz (16), der an den Abflachungen (15) der Stufe (14) des Kulissenelementes (8) geführt ist und einen am gekröpften unteren Hebelende (17) nach unten offenen Schlitz (18) zum Einrasten über den Sicherungsstift (5) aufweist.

5. Höhenverstellvorrichtung nach einem oder mehreren der Ansprüche 1 bis 4, dadurch gekennzeichnet, daß das Kulissenelement (8) und der Hebel (9) über eine Scheibe (19) und eine Schraube (20) gesichert sind.

6. Höhenverstellvorrichtung nach einem oder mehreren der Ansprüche 1 bis 5, dadurch gekennzeichnet, daß der Hebel (9) über Längsverschiebung in der Stufe (14) des Kulissenelementes (8) am Sicherungsstift (5) ein- und ausrastbar ist und durch Drehung des Hebels (9) das Kulissenelement derart mitführbar ist, daß es bei einer 90°-Drehung die miteinander verriegelten Profilrohre (1, 2) zur gegenseitigen Lageveränderung freigibt.

7. Höhenverstellvorrichtung nach einem oder mehreren der Ansprüche 1 bis 6, dadurch gekennzeichnet, daß das Kulissenelement (8) ein Kuststoffteil sein kann, vorzugsweise dann ein gespritztes Teil.

## Claims

1. Height adjustment device for truck tarpaulin frame construction with at least two tube sections which are telescopically adjustable in relation to one another and can be locked at stepped intervals over their entire height, characterised by the fact that the two tube sections (1, 2) are, in both the locked and unlocked condition, ie also during the adjusting procedure, permanently held together by a turnable locking device with a fastening element (8) and a lever (9), which device is stationary in relation to height and depth.

2. Height adjustment device as under Claim 1, characterised by the fact that one end of a wall, preferably the upper end of the stationary tube section (1) is provided with a through bore (4) and, at a vertical distance to this, a locking pin (5) pointing outwards and that the extendable and retractable tube section (2) has, on one wall in correspondence with the through bore (4), a slit (6) with circular cut-outs (7) arranged at intervals along the slit.

3. Height adjustment device as under Claim 1 or 2, characterised by the fact that the fastening element (8) is provided with four steps in such a way that a washer (10) overlapping the slit (6) and the circular cut-outs (7) supports itself against the inner side of the wall of the tube section (2), that the step (11) passing through the wall of the tube section (2) takes the form of a circle whose diameter corresponds to the diameter of the circular cut-out (7), and is provided with flat surfaces (12) corresponding to the width of the slit (6), that the step (13) passing through the wall of the stationary tube section (1) is shaped to correspond to the diameter of bore (4), and that the step (14) lying on the outside is provided with flat surfaces (15).

4. Height adjustment device as under Claims 1 to 3, characterised by the fact that the lever (9) is provided with a slot (16) in such a way that it moves along the flat surfaces (15) of the step (14) of the fastening element (8) and, at the lower end of the lever (17) which is bent outwards at right angles, with a slot (18) having an open end pointing downwards for locking with the locking pin (5).

5. Height adjustment device as under one or several of Claims 1 to 4, characterised by the fact that the fastening element (8) and the lever (9) are retained by means of a washer (19) and a bolt (20).

6. Height adjustment device as under one or several of Claims 1 to 5, characterised by the fact that the lever (9) can, by longitudinal movement, in the step (14) of the fastening element (8) be locked and unlocked at the locking pin (5), and that the fastening element, by a turn of the lever (9), can be moved with the lever in such a way that, when turned by 90°, it releases the tube sections so far held together for a relative change of position.

7. Height adjustment device as under one or several of Claims 1 to 6, characterised by the fact that the fastening element (8) can be a synthetic part, and, if so, preferably an injection moulded part.

## Revendications

1. Dispositif de réglage en hauteur pour le montage de la bâche de couverture de camions avec au moins deux profilés tubulaires réglables l'un par rapport à l'autre de type télescopique, qui peuvent être bloqués l'un avec l'autre dans leur extension en hauteur à intervalles échelonnés, dispositif de réglage en hauteur caractérisé en ce que les deux profilés tubulaires (1, 2), aussi bien en position bloquée qu'en position non bloquée, ou aussi lors du processus de réglage, sont traversés en permanence par une unité de blocage à poste fixe vers le haut et vers le bas, mais pouvant tourner avec un élément coulissant (8) et un levier (9).

2. Dispositif de réglage selon la revendication 1, caractérisé en ce qu'à une extrémité d'une paroi, de préférence l'extrémité supérieure du profilé tubulaire (1) stationnaire, est prévu un alésage de passage (4) et à une certaine distance verticale, une broche de sécurité (5) dirigée vers l'extérieur, en ce que le profilé tubulaire (2) qui peut être enfoncé et ressorti présente, sur une paroi correspondant à l'alésage de passage (4), une fente (6) avec des sections circulaires (7) disposées à intervalles sur le trajet de la fente.

3. Dispositif de réglage en hauteur selon les revendications 1 ou 2, caractérisé en ce que l'élément coulissant (8) présente quatre étages de telle sorte qu'une rondelle (10) recouvrant la fente (6) et la section circulaire (7) s'appuie contre le côté intérieur de la paroi du profilé tubulaire (2), en ce que l'étage (11) venant en prise à travers la paroi du profilé tubulaire (2) est formé en fonction du diamètre de la section circulaire (7) avec des méplats (12) correspondant à la largeur de la fente (6), en ce que l'étage (13) venant en prise à travers la paroi du profilé tubulaire stationnaire (1) est formé en fonction du diamètre de l'alésage (4) et en ce que l'étage situé à l'extérieur (14) présente des méplats (15).

4. Dispositif de réglage en hauteur selon les revendications 1 à 3, caractérisé en ce que le levier (9) présente une fente (16), qui est guidée sur les méplats (15) de l'étage (14) de l'élément coulissant (8) et une fente (18) à l'extrémité inférieure recourbée du levier (17), ouverte par le bas pour s'encliqueter sur la broche de sécurité (5).

5. Dispositif de réglage en hauteur selon une ou plusieurs des revendications 1 à 4, caractérisé en ce que l'élément coulissant (8) et le levier (9) sont fixés au moyen d'une rondelle (19) et d'une vis (20).

6. Dispositif de réglage en hauteur selon une ou plusieurs des revendications 1 à 5, caractérisé en ce que le levier (9) peut être encliqueté et décliqueté par une translation longitudinale dans l'étage (14) de l'élément coulissant (8) sur la broche de sécurité (5) et par rotation du levier (9) l'élément coulissant peut être guidé de telle façon qu'il libère par une rotation à 90° les profilés tubulaires verrouillés l'un avec l'autre (1, 2) pour modifier réciproquement leur position.

7. Dispositif de réglage en hauteur selon une ou plusieurs des revendications 1 à 6, caractérisé en ce que l'élément coulissant (8) peut être une pièce en matière synthétique, de préférence une pièce obtenue par injection.
